Europäisches Patentamt

European Patent Office

Office européen des brevets

(19)

(11) Numéro de publication: **0 084 751**
**B1**

(12) **FASCICULE DE BREVET EUROPEEN**

(45) Date de publication du fascicule du brevet:
**03.07.85**

(21) Numéro de dépôt: **82402390.7**

(22) Date de dépôt: **28.12.82**

(51) Int. Cl.⁴: **F 16 H 57/06, B 60 K 20/10**

(54) Dispositif de commande manuelle de changement de vitesses à verrouillage de la marche arrière.

(30) Priorité: **20.01.82 FR 8200809**

(43) Date de publication de la demande:
**03.08.83 Bulletin 83/31**

(45) Mention de la délivrance du brevet:
**03.07.85 Bulletin 85/27**

(84) Etats contractants désignés:
**DE GB IT SE**

(56) Documents cités:
**FR - A - 1 586 883**
**FR - A - 2 060 641**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Hulin, René, 35 Rue Charles Floquet, F-92500 Rueil Malmaison (FR)**
Inventeur: **Schiler, Daniel, 16 Allée des Capucines Cressely, F-78470 St. Remy les Chevreuse (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

L'invention est relative aux dispositifs de commande manuelle de boîtes de vitesses pour véhicules automobiles, du type comprenant d'une part un levier de manœuvre relativement éloigné de la boîte de vitesses, porté par un palier solidaire de la caisse du véhicule et relié à deux éléments mobiles de la boîte de vitesses par au moins une tige articulée et un levier de renvoi, de sorte que par un basculement déterminé du levier de manœuvre successivement dans deux directions perpendiculaires entre elles, chaque rapport de la boîte de vitesses est sélectionné puis engagé, d'autre part des organes de butée qui coopèrent lors du basculement du levier de manœuvre vers sa position de marche arrière et des moyens de désengagement de ces organes de butée.

Pour éviter de sélectionner involontairement un des rapports, notamment celui correspondant à la marche arrière du véhicule, il est connu de prévoir un mécanisme de verrouillage comprenant des organes de butée qui interdisent normalement le basculement du levier de manœuvre vers sa position de marche arrière; ce basculement ne peut être réalisé que par une manœuvre volontaire complémentaire qui consiste en un déplacement axial du levier ou d'une pièce portée par celui-ci, ce déplacement ayant pour effet de désengager l'un de l'autre les organes de butée.

Dans les agencements connus, les organes de butée sont habituellement disposés d'une part sur le levier de manœuvre, d'autre part sur une pièce solidaire de la caisse du véhicule. Cette disposition présente un inconvénient dû à la mobilité de la boîte de vitesses, et par suite de la tige articulée et des leviers, par rapport à la caisse. En effet, la coopération des organes de butée destinée à empêcher la sélection de la marche arrière correspond à une position bien déterminée du levier de manœuvre par rapport à la caisse; mais si un déplacement de la boîte de vitesses, ou du groupe motopropulseur auquel appartient cette boîte, sur ses supports élastiques, provoque un léger basculement du levier de manœuvre, il peut arriver que les organes de butée n'interviennent plus pour la position prévue des éléments mobiles de la boîte de vitesses, et par suite la marche arrière risque d'être engagée intempestivement, ou bien un autre rapport que la marche arrière risque de ne plus pouvoir être sélectionné. Par ailleurs, le palier qui porte le levier de manœuvre étant de préférence souple, la position de ce levier pour laquelle les organes de butée coopèrent n'est pas constante, le levier basculant légèrement, par déformation du palier, quand un effort de manœuvre lui est appliqué; ce basculement risque d'être suffisant pour permettre la sélection de la marche arrière bien que les organes de butée soient en position de coopération mutuelle.

L'invention a pour but de remédier à ces inconvénients en aménageant, dans un dispositif de commande de changement de vitesses à levier de manœuvre éloigné de la boîte de vitesses, un mécanisme de verrouillage de l'engagement de la marche arrière qui soit insensible aux déplacements de la boîte de vitesses par rapport à la caisse du véhicule.

A cet effet, l'invention a pour objet un dispositif de commande du type précité, caractérisé en ce que les organes de butée sont disposés d'une part sur la boîte de vitesses, d'autre part sur un levier articulé sur la boîte de vitesses et relié au levier de manœuvre par ladite tige ou par l'une desdites tiges.

Selon quelques caractéristiques secondaires de l'invention:

— dans un mode de réalisation, l'un des organes de butée est un doigt de verrouillage escamotable relié par un câble de transmission au levier de manœuvre ou à une pièce portée par ce dernier;

— dans un autre mode de réalisation, l'un des organes de butée est un doigt de verrouillage solidaire de l'élément mobile d'un électro-aimant relié électroniquement à un interrupteur disposé sur le levier de manœuvre;

— le dispositif comportant une tige de sélection pivotant sensiblement autour de son axe, d'une part dans un palier souple solidaire de la caisse et situé à proximité du levier de manœuvre, d'autre part sur une articulation universelle solidaire de la boîte de vitesses, le levier de manœuvre s'articulant sur cette tige autour d'un axe perpendiculaire à celle-ci et au levier de manœuvre, le doigt de verrouillage est porté par un levier de renvoi, dit levier de sélection, fixé sur la tige de sélection à proximité de l'articulation universelle.

Un exemple de réalisation d'un dispositif de commande selon l'invention est décrit ci-après, avec référence au dessin annexé, sur lequel:

— la fig. 1 est une vue simplifiée en perspective d'un dispositif de commande suivant l'invention;

— la fig. 2 est une vue détaillée en coupe partielle d'une partie de ce dispositif.

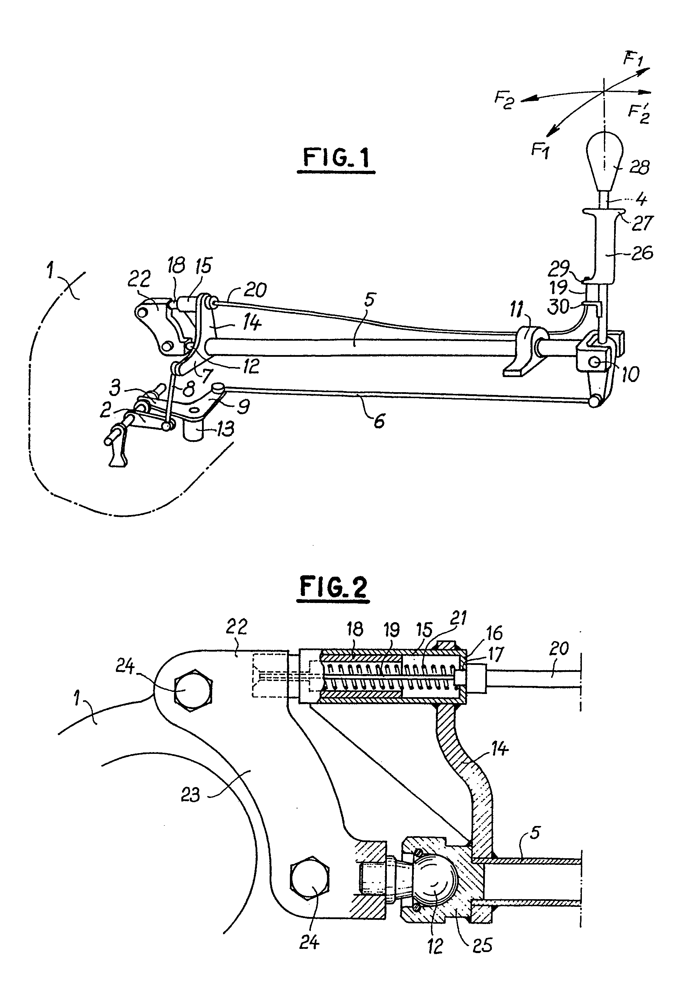

Sur la fig. 1, on voit un dispositif de commande de la boîte de vitesses 1 d'un véhicule automobile, commande propre à déplacer successivement deux éléments mobiles 2, 3 de la boîte de vitesses par des déplacements transversaux (flèches $F_1$, $F'_1$) puis longitudinaux ($F_2$, $F'_2$) d'un levier de manœuvre 4 sensiblement vertical. La boîte de vitesses 1 peut notamment appartenir à un groupe motopropulseur monté transversalement sur des supports élastiques à l'avant du véhicule.

Le levier 4 s'articule sur deux tiges longitudinales 5, 6 respectivement reliées aux éléments mobiles 2, 3, l'une 5 par un bras 7 d'un levier dit de sélection relié à l'élément 2 par une biellette 8, l'autre 6 par un levier de renvoi 9. La liaison entre le levier 4 et la tige 5 s'effectue par un axe transversal 10. La tige 5 est portée d'une part par la caisse du véhicule au moyen d'un palier souple 11 proche du levier 4, et d'autre part par la boîte de vitesses au moyen d'une articulation universelle à rotule 12 que l'on voit bien sur la fig. 2. La tige 5 peut ainsi tourner de 30 degrés environ autour de son axe et pivoter de quelques degrés autour de l'axe vertical passant par le centre du palier 11. La tige 6 est reliée par des articulations universelles à un prolongement inférieur du levier 4 et à un bras du levier de renvoi 9, dont l'autre bras constitue l'élément mobile 3, ce levier 9 pivotant dans un palier 13 solidaire de la boîte de vitesses.

Le levier de sélection est solidaire de la tige 5, contenu dans un plan perpendiculaire à celle-ci et adjacent à la rotule 12; il comporte, en plus du bras 7, un autre bras 14 à l'extrémité libre duquel est fixée une pièce tubulaire 15 parallèle à la tige 5 et comportant du côté du levier 4 un fond 16 muni d'un orifice central 17. La pièce 15 sert de guide à un doigt cylindrique 18 auquel est accroché un câble 19 traversant l'orifice 17. A l'extérieur du guide 15, le câble est entouré d'une gaine 20 dont l'extrémité correspondante est en appui contre le fond 16. A l'intérieur du guide 15 est disposé entre le doigt 18 et le fond 16 un ressort 21 qui pénètre coaxialement dans le doigt et qui entoure le câble 19. La compressibilité du ressort 21 permet au doigt 18 de coulisser entre une position d'effacement, où il est escamoté dans le guide 15, et une position active, représentée sur les deux figures, où il émerge notablement de ce guide dans le sens opposé au levier 4. Dans cette position active, il est disposé de façon à coopérer avec une butée 22 formée sur une pièce 23 fixée sur la boîte de vitesses par des vis 24. Plus précisément, le doigt 18 entre en contact avec la butée 22 quand le levier 4 est poussé dans la direction $F_1$ correspondant à la sélection de la marche arrière. A la pièce 23 est fixée la rotule 12 sur laquelle s'articule la tige 5, laquelle est munie à cet effet d'un embout 25 formant siège sphérique pour la rotule.

Sur le levier 4 coulisse un fourreau 26 comportant une collerette de préhension 27 située à proximité d'un pommeau 28 que porte le levier 4 à son extrémité libre. L'extrémité du câble 19 opposée à celle qui est liée au doigt 18 est accrochée à une proéminence 29 du fourreau, et l'extrémité correspondante de la gaine 20 prend appui sur une patte 30 fixée au levier 4. La tension du câble, due au ressort 21 qui pousse le doigt 18 vers l'extérieur du guide 15, maintient normalement le fourreau 26 en position basse. Dans cette position, le conducteur du véhicule peut engager tout autre rapport que la marche arrière, en manœuvrant le levier 4 par son pommeau 28 dans les directions $F'_1$ et/ou $F_2$ ou $F'_2$. A ces mouvements du levier 4 correspondent des positions du bras de levier 14 pour lesquelles le doigt 18 n'entre pas en contact avec la butée 22.

Lorsque le conducteur désire sélectionner la marche arrière, pour pouvoir basculer le levier 4, donc le bras de levier 14, dans la direction $F_1$, il doit soulever tout d'abord le fourreau 26 de manière à tirer suffisamment sur le câble 19 à l'encontre du ressort 21 pour que le doigt 18, s'enfonçant dans le guide 15, s'efface par rapport à la butée 22.

Cette commande de l'effacement du doigt 18 au moyen du fourreau 26 constitue un verrouillage de l'engagement de la marche arrière puisqu'elle interdit le basculement suivant $F_1$, donc la sélection de la marche arrière, tant que le fourreau 26 n'est pas soulevé, c'est-à-dire lors des manœuvres d'engagement des rapports de marche avant par saisie du pommeau 28. Ce verrouillage n'est pas influencé par les déplacements de la boîte de vitesses 1 par rapport à la caisse du véhicule puisque le levier 7, 14 qui porte le doigt de verrouillage 18 s'articule sur la boîte de vitesses elle-même, à proximité des organes de butée constitués par le doigt 18 et la butée 22; ainsi, une déviation même notable de la tige 5 autour du centre du palier 11, déviation consécutive à un déplacement de la boîte de vitesses, ne provoque pas de déplacement sensible du doigt 18 par rapport à la boîte de vitesses, donc à la butée 22.

L'invention s'applique, en variante, à d'autres configurations classiques dans lesquelles le levier 4 est légèrement mobile suivant son axe, c'est-à-dire verticalement, par rapport à la caisse, à l'encontre d'un organe élastique qui oblige à faire coulisser volontairement ce levier 4 pour sélectionner la marche arrière, sans adjonction d'un fourreau coulissant tel que 26. Le câble 19 est alors accroché au levier lui-même, et l'embout correspondant de sa gaine 20 prend appui sur la caisse du véhicule. On comprend que, dans ce cas également, pour les mêmes raisons que précédemment, la commande de déverrouillage du doigt 18 est insensible aux déplacements de la boîte de vitesses par rapport à la caisse du véhicule, grâce à la flexibilité du câble 19 et de sa gaine et à l'agencement des organes de butée.

Dans un autre mode de réalisation de l'invention, non représenté, le guide 15 contient un électro-aimant dont l'élément mobile est solidaire du doigt de verrouillage 18; la transmission par câble est alors remplacée par un conducteur électrique reliant le bobinage de l'électro-aimant à un interrupteur disposé sur le levier de manœuvre 4 et propre à être actionné par le conducteur du véhicule, lors de la sélection de la marche arrière, de manière à alimenter l'électro-aimant et à écarter ainsi le doigt 18 de sa position de verrouillage.

## Revendications

1. Dispositif de commande manuelle de boîte de vitesses pour véhicule automobile, du type comprenant d'une part un levier de manœuvre (4) relativement éloigné de la boîte de vitesses (1), porté par un palier (11) solidaire de la caisse du véhicule et relié à deux éléments mobiles (2, 3) de la boîte de vitesses par au moins une tige articulée (5, 6) et un levier de renvoi (7, 14, 9), de sorte que par un basculement déterminé du levier de manœuvre successivement dans deux directions perpendiculaires entre elles, chaque rapport de la boîte de vitesses est sélectionné puis engagé, d'autre part des organes de butée (18, 22) qui coopèrent lors du basculement du levier de manœuvre vers sa position de marche arrière et des moyens (19) de désengagement de ces organes de butée, caractérisé en ce que les organes de butée (18, 22) sont disposés d'une part sur la boîte de vitesses (1), d'autre part sur un levier (7, 14) articulé sur la boîte de vitesses et relié au levier de manœuvre (4) par ladite tige ou par l'une (5) desdites tiges (5, 6).

2. Dispositif de commande suivant la revendication 1, caractérisé en ce que l'un des organes de butée est un doigt de verrouillage escamotable (18) relié par un câble de transmission (19) au levier de manœuvre (4) ou à une pièce (26) portée par ce dernier.

3. Dispositif de commande suivant la revendication 1, caractérisé en ce que l'un des organes de butée est un doigt de verrouillage solidaire de l'élément mobile d'un électro-aimant relié électroniquement à un interrupteur disposé sur le levier de manœuvre.

4. Dispositif de commande suivant l'une des revendications 2 et 3, comportant une tige de sélection (5) pivotant sensiblement autour de son axe, d'une part dans un palier souple (11) solidaire de la caisse et situé à proximité du levier de manœuvre (4), d'autre part sur une articulation universelle (12) solidaire de la boîte de vitesses (1), le levier de manœuvre s'articulant sur cette tige autour d'un axe (10) perpendiculaire à celle-ci et au levier de manœuvre (4), caractérisé en ce que le doigt de verrouillage (18) est porté par un levier de renvoi (7, 14), dit levier de sélection, fixé sur la tige de sélection (5) à proximité de l'articulation universelle (12).

5. Dispositif de commande suivant la revendication 4, caractérisé en ce que l'organe de butée (22) solidaire de la boîte de vitesses (1) est constitué par une portion d'une pièce (23) qui porte l'articulation universelle susmentionnée (12) et qui est fixée sur la boîte de vitesses.

6. Dispositif de commande suivant l'une des revendications 4 et 5, caractérisé en ce que le doigt de verrouillage (18) coulisse dans un guide (15) solidaire du levier de sélection (7, 14), parallèlement à l'axe de pivotement de la tige de sélection (5), et est rappelé par un ressort (21) vers une position où il est susceptible de coopérer avec une butée (22) solidaire de la boîte de vitesses.

7. Dispositif de commande suivant les revendications 2 et 6 prises ensemble, caractérisé en ce que la transmission par câble comporte un câble (19) dont une extrémité est accrochée au doigt de verrouillage (18), et une gaine (20) en appui sur le guide (15), l'autre extrémité du câble étant accrochée à un fourreau (26) coulissant axialement sur le levier de manœuvre (4), lequel porte une patte (30) d'appui de la gaine du câble.

## Patentansprüche

1. Handsteuervorrichtung für das Schaltgetriebe eines Automobils, mit einerseits einem vom Getriebe (1) verhältnismässig weit entfernten Schalthebel (4), welcher von einem mit dem Fahrzeugkasten fest verbundenen Lager (11) gehalten wird und mit zwei beweglichen Elementen (2, 3) des Getriebes über wenigstens eine Gelenkstange (5, 6) und einen Umlenkhebel (7, 14, 9) verbunden ist, so dass durch ein bestimmtes Kippen des Schalthebels aufeinanderfolgend in zwei zueinander senkrechten Richtungen jeder Gang des Getriebes ausgewählt und dann eingelegt wird, und andererseits Anschlagelementen (18, 22), welche bei einem Kippen des Schalthebels in seine Rückwärtsgangstellung zusammenwirken und Mitteln (19) zur Lösung dieser Anschlagelemente, dadurch gekennzeichnet, dass die Anschlagelemente (18, 22) einerseits auf dem Getriebe (1) und andererseits auf einem am Getriebe angelenkten und mit dem Schalthebel (4) über die Stange oder eine (5) der Stangen (5, 6) verbundenen Hebel (7, 14) angebracht sind.

2. Steuervorrichtung nach Anspruch 1, dadurch gekennzeichnet, dass eines der Anschlagelemente ein einziehbarer Riegelfinger (18) ist, welcher über einen Seilzug (19) mit dem Schalthebel (4) oder einem von diesem getragenen Teil (26) verbunden ist.

3. Steuervorrichtung nach Anspruch 1, dadurch gekennzeichnet, dass eines der Anschlagelemente ein Riegelfinger ist, welcher mit dem beweglichen Element eines Elektromagneten fest verbunden ist, welcher elektrisch mit einem auf dem Schalthebel angebrachten Schalter verbunden ist.

4. Steuervorrichtung nach einem der Ansprüche 2 und 3, mit einer Auswahlstange (5), welche im wesentlichen um ihre Achse einerseits in einem mit dem Kasten fest verbundenen und in der Nähe des Schalthebels (4) liegenden weichen Lager (11) und andererseits auf einem mit dem Getriebe (1) fest verbundenen Universalgelenk (12) schwenkt, wobei der Schalthebel auf dieser Stange um eine zu dieser und zum Schalthebel (4) senkrechte Achse (10) schwenkt, dadurch gekennzeichnet, dass der Riegelfinger (18) von einem Auswahlhebel genannten Umlenkhebel (7, 14) getragen wird, welcher an der Auswahlstange (5) in der Nähe des Universalgelenks (12) befestigt ist.

5. Steuervorrichtung nach Anspruch 4, dadurch gekennzeichnet, dass das mit dem Getriebe (1) fest verbundene Anschlagelement (22) durch einen Abschnitt eines Teiles (23) gebildet ist, welches das oben erwähnte Universalgelenk (12) trägt und am Getriebe befestigt ist.

6. Steuervorrichtung nach einem der Ansprüche 4 und 5, dadurch gekennzeichnet, dass der Riegelfinger (18) in einer mit dem Auswahlhebel (7, 14) fest verbundenen Führung (15) parallel zur Schwenkachse der Auswahlstange (5) gleitet und durch eine Feder (21) in eine Stellung, in der er mit einem mit dem Getriebe fest verbundenen Anschlag (22) zusammenwirken kann, zurückgeholt wird.

7. Steuervorrichtung nach den Ansprüchen 2 und 6 gemeinsam, dadurch gekennzeichnet, dass der Kabelzug ein Kabel (19), dessen eines Ende am Riegelfinger (18) eingehängt ist, und einen gegen die Führung (15) anliegenden Mantel (20) aufweist, wobei das andere Ende des Kabels an einer Hülse (26) eingehängt ist, welche axial auf dem Schalthebel (4) gleitet, der einem Anschlaglappen (30) für den Mantel des Kabels trägt.

## Claims

1. A manual control device for a gear box for an automobile vehicle, of the type comprising, on one hand, a gear shift lever (4) relatively remote from the gear box (1), carried by a bearing (11) mounted on the body of the vehicle and connected to two movable elements (2, 3) of the gear box through at least one articulated rod (5, 6) and a bell crank lever (7, 14, 9) so that, by a given pivoting of the gear shift lever successively in two directions perpendicular to each other, each speed ratio of the gear box is selected and then engaged, and, on the other hand, abutment means (18, 22) which cooperate upon the pivoting of the gear shift lever to its reverse speed position, and means (19) for disengaging said abutment means, characterized in that the abutment means (18, 22) are disposed, on one hand, on the gear box (1), and, on the other hand, on a lever (7, 14) pivotally mounted on the gear box and connected to the gear shift lever (4) through said rod or through one (5) of said rods (5, 6).

2. A control device according to claim 1, characterized in that one of the abutment means is a retractable locking finger member (18) connected through a transmission cable (19) to the gear shift lever (4) or to an element (26) carried by the latter.

3. A control device according to claim 1, characterized in that one of the abutment means is a locking finger member connected to a movable element of an electromagnet electrically connected to a switch disposed on the gear shift lever.

4. A control device according to one of the claims 2 and 3, comprising a selecting rod (5) which is pivotable substantially about its axis, on one hand, in a flexible bearing (11) connected to the body and located in the vicinity of the gear shift lever (4), and, on the other hand, on a universal articulation (12) connected to the gear box (1), the gear shift lever being mounted on said rod to pivot about an axis (10) perpendicular to the latter and to the gear shift lever (4), characterized in that the locking finger member (18) is carried by a belt crank lever (7, 14), termed a selecting lever, fixed on the selecting rod (5) in the vicinity of the universal articulation (12).

5. A control device according to claim 4, characterized in that the abutment means (22) connected to the gear box (1) is formed by a portion of an element (23) which carries said universal articulation (12) and which is fixed to the gear box.

6. A control device according to one of the claims 4 and 5, characterized in that the locking finger member (18) is slidable in a guide (15) connected to the selecting lever (7, 14), in a direction parallel to the pivot axis of the selecting rod (5) and is biased by a spring (21) toward a position in which it is capable of cooperating with an abutment (22) connected to the gear box.

7. A control device according to claims 2 and 6 taken together, characterized in that the transmission through a cable comprises a cable (19) which has an end portion hooked to the locking finger member (18) and a sheath (20) bearing against the guide (15), the other end portion of the cable being hooked to a sleeve (26) which is axially slidable on the gear shift lever (4) which carries a lug (30) against which the sheath of the cable bears.

FIG.1

FIG.2